# EUROPÄISCHE PATENTSCHRIFT

(11) **EP 1 153 815 B1**
(45) Veröffentlichungstag und Bekanntmachung des Hinweises auf die Patenterteilung: **20.10.2004**
(21) Anmeldenummer: 01105752.8
(22) Anmeldetag: 08.03.2001
(51) Int. Cl.: B62B 3/06

(54) **Deichsel für kraftgetriebene Flurförderzeuge**
Drawbar for a power driven forklift truck
Timon pour un chariot élévateur motorisé

(30) Priorität: 12.05.2000 DE 20008550 U
(43) Veröffentlichungstag der Anmeldung: 14.11.2001
(73) Patentinhaber: Jungheinrich Aktiengesellschaft, 22047 Hamburg (DE)
(72) Erfinder: Lohmann, Helmut, Dipl.-Ing., 27404 Nartum-Gyhum (DE)
(74) Vertreter: Graalfs, Edo, Dipl.-Ing.

(56) Entgegenhaltungen:
- EP-A- 0 751 060
- DE-A- 19 732 511
- DE-U- 20 013 656

## Beschreibung

Die Erfindung bezieht sich auf eine Deichsel für kraftgetriebene Flurförderzeuge nach dem Oberbegriff des Anspruchs 1.

Bei deichselgelenkten Flurförderzeugen wird unterschieden zwischen Fahrzeugen, die reine Mitgängerfahrzeuge sind und solchen, die für einen Mitfahrerbetrieb gedacht sind. Daneben gibt es mitfahrerbetriebene Fahrzeuge, die auch mitgehend gelenkt werden können.

Aus dem Gebrauchsmuster DE-U-9 303 109 ist eine Deichsel für ein Mitfahrerfahrzeug bekannt geworden, bei dem die Griffabschnitte beidseits eines Deichselschafts von der Schwenkachse der Deichsel fortgeneigt angeordnet sind. Diese Deichselausbildung ist für Fahrzeuge gedacht, bei denen der Bediener auf einer Plattform stehend mitfährt. Es können hohe Lenkmomente auf die Deichsel ausgeübt werden. Die Deichsel zeigt dabei vorzugsweise auf den Bauch des Bedieners. Im Mitgängerbetrieb und besonders bei starkem Lenkeinschlag der Deichsel im Mitfahrerbetrieb erweist sich diese Lösung als nicht optimal.

Aus der gattungsbildenden EP-A-0 751 060 ist eine Deichsel für kraftgetriebene Flurförderzeuge bekannt geworden, bei der die Griffe beidseitig des Horns annähernd auf einer Kreisbogenlinie liegen, deren Kreismittelpunkte auf der Stielseite der Deichsel liegen. Eine derartige Anordnung ist günstig, wenn der Bediener neben der Deichsel geht und das Fahrzeug mit einer Hand führt und die Lenkbewegungen durch Ziehen und Drücken zur Seite ausführt. Hierfür ist auch eine Schalttastenanordnung zweckmäßig, bei der die Tastenreihen in Richtung der Griffe konvergierend angeordnet sind. Für einen Mitfahrerbetrieb ist eine derartige Deichsel nur bedingt geeignet.

Der Erfindung liegt die Aufgabe zugrunde, eine Deichsel für kraftgetriebene Flurförderzeuge zu schaffen, die für den Mitgängerbetrieb und auch den Mitfahrerbetrieb gleichermaßen gut geeignet ist.

Diese Aufgabe wird durch die Merkmale des Patentanspruchs 1 gelöst.

Bei der erfindungsgemäßen Deichsel verlaufen die Griffe auf einer bogenförmigen Kurve, deren Krümmungsmittelpunkte sich in der normalen Bedienposition, in der die Deichsel im Mitfahrerbetrieb annähernd auf den Bauch des Bedieners zeigt, unterhalb des Deichselkopfes befinden und die zugehörigen Radiuslinien zwischen den Kurven und Krümmungsmittelpunkten einen stumpfen Winkel zum Unterarm des Bedieners bilden.

Die gekrümmten Griffe lassen unterschiedliche Griffpositionen und Griffwinkel zu, wobei nach einer Ausgestaltung der Erfindung die Achse der Endabschnitte der Griffe nahe dem Fahrschalter annähernd zur Achse des Fahrschalters ausgerichtet ist. Dadurch hat der Daumen einen besseren Zugang zum Fahrschalter. Durch die Krümmung im Außenbereich mit den Krümmungsradien im stumpfen Winkel zum Unterarm des Bedieners lassen sich hohe Lenkmomente übertragen. Gleichzeitig lässt diese Form der Griffe auch eine gute seitliche Bedienung für den Mitgängerbetrieb oder beim starken Lenkeinschlag zu.

Nach einer weiteren Ausgestaltung der Erfindung ist die Achse des Endabschnitts der Griffe nahe dem Fahrschalter annähernd zur Achse des Fahrschalters ausgerichtet.

Nach einer weiteren Ausgestaltung der Erfindung weisen die Schenkelabschnitte auf der Innenseite eine nach oben und zur Seite gerichtete Anlagefläche für den äußeren Finger des Bedieners auf. Auf diese Weise lässt sich eine hohe Lenkkraft übertragen, ohne dass Schmerzen auftreten.

Nach einer anderen Ausgestaltung der Erfindung bilden die Griffe, Schenkelabschnitte und Trägerabschnitte eine Öffnung, die außen breit und zum Horn hin kleiner wird derart, dass auch das Greifen und Betätigen der Deichsel mit einer Hand von der Seite möglich ist. Dies ist besonders beim 90°-Lenkwinkeleinschlag beim Rangieren und auch im Mitgängerbetrieb von Vorteil.

Nach einer weiteren Ausgestaltung der Erfindung befinden sich auf den nach oben weisenden Flächen der Trägerabschnitte mindestens drei Schalttasten im Bereich von Zeige- und Mittelfinger des Bedieners, die auf einer bogenförmigen Kurve angeordnet sind, deren Krümmungsmittelpunkte und Krümmungsradien den Griffen zugewandt sind. Die Schalttastenpositionen sind für den Mitfahrerbetrieb ausgelegt und bieten eine gute Zugänglichkeit durch Zeige- und Mittelfinger, auch wenn die Hand den Griff gleichzeitig erfasst.

Der Fahrschaltergriff hat, wie bei der bekannten Ausgestaltung der Deichsel, eine Mulde, in die der Daumen der den Griff erfassenden Hand eingreifen kann. Nach einer Ausgestaltung der Erfindung wird die Mulde nach oben durch einen schmalen Steg begrenzt, dessen rückseitige Fläche angeschrägt und so ausgebildet ist, dass der Fahrschaltergriff mit dem Daumen auch bei einem 90°-Lenkwinkeleinschlag beim Rangieren und im Mitgängerbetrieb betätigbar ist.

Der Fahrschalter kann nach einer weiteren Ausgestaltung der Erfindung zum Griff hin eine zylindrische oder konische Verlängerung aufweisen. Diese Verlängerung wird von Daumen und Zeigefinger erfasst und führt insbesondere bei längeren Fahrstrecken zur Entlastung der Handmuskeln.

Der Fahrschaltergriff kann bezüglich einer Ebene, die sich durch seine Achse und die Mitte der Mulde erstreckt, symmetrisch ausgeformt sein. Dadurch sind beide Fahrschaltergriffe identisch. Es braucht daher nur eine Form für die Herstellung der Griffe vorgesehen werden.

Die Erfindung wird nachfolgend anhand von Ausführungsbeispielen näher erläutert.
- Fig. 1: zeigt ein Mitfahrerflurförderzeug mit einer Deichsel nach der Erfindung in Seitenansicht.
- Fig. 2: zeigt vergrößert den Deichselkopf der Deichsel nach Fig. 1 ebenfalls in Seitenansicht.
- Fig. 3: zeigt die Rückansicht des Deichselkopfes nach Fig. 2.
- Fig. 4: zeigt die Draufsicht auf den Deichselkopf nach Fig. 2.
- Fig. 5: zeigt die Seitenansicht eines Fahrschalters des Deichselkopfs nach Fig. 2.
- Fig. 6: zeigt die Draufsicht auf den Fahrschaltergriff nach Fig. 5
- Fig. 7: zeigt den Fahrschaltergriff nach Fig. 6 bei seiner Betätigung.
- Fig. 8: zeigt eine ähnliche Darstellung wie Fig. 4, jedoch mit einer anderen Ausbildung des Fahrschaltergriffes.

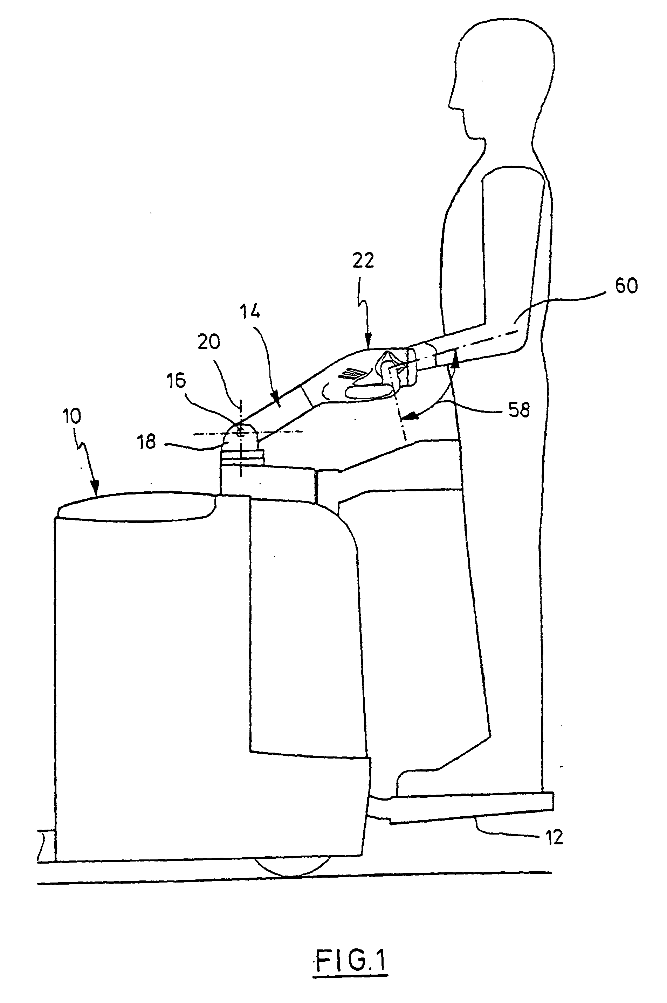

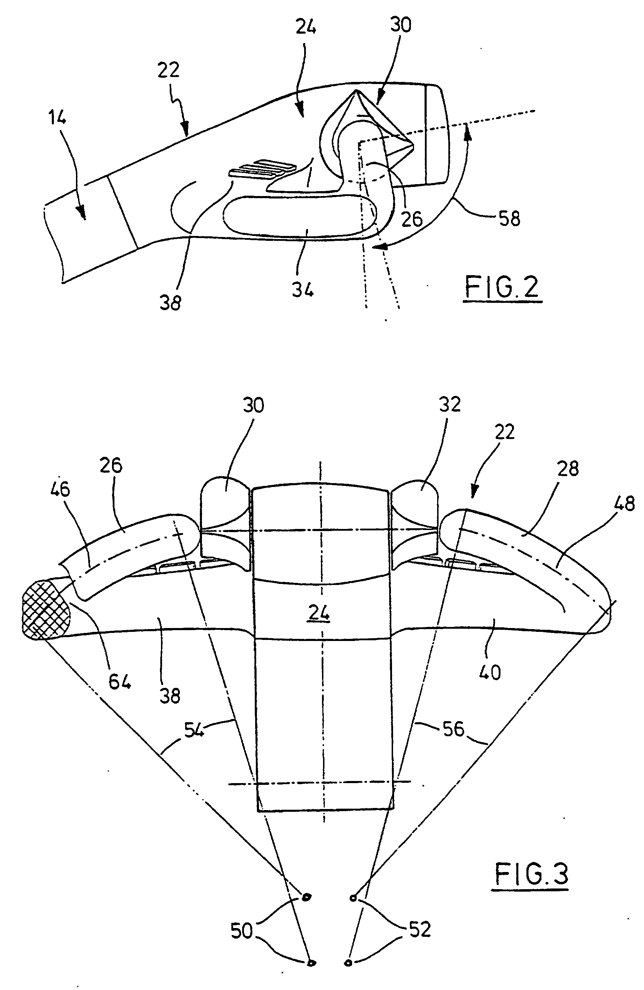

In Fig. 1 ist ein Mitfahrerflurförderzeug 10 in Umrissen dargestellt, bei dem der Bediener auf einer Plattform 12 steht. Das Flurförderzeug 10 wird mit Hilfe einer Deichsel 14 gelenkt, die um eine horizontale Achse bei 16 um ein Lagerbauteil 18 schwenkbar gelagert ist, das seinerseits um eine vertikale Achse 20 verdrehbar ist zwecks Verschwenkung des zu lenkenden Rades. Die Deichsel 14 weist einen Deichselkopf 22 auf, dessen Einzelheiten anhand weiterer Figuren näher beschrieben wird. Die Beschreibung konzentriert sich zunächst auf die Figuren 2 bis 4.

In Verlängerung des Deichselstiels der Deichsel 14 ist ein Horn 24 vorgesehen. Beidseits des Horns 24 erstrecken sich im Querschnitt kreisförmige längliche Griffe 26, 28, wobei zwischen den Griffen 26, 28 und dem Horn 24 Fahrschaltergriffe 30, 32 angeordnet sind, die um eine annähernd horizontale Achse am Horn 24 gelagert sind. An den äußeren Enden der Griffe 26, 28 sind annähernd parallel zum Horn 24 sich erstreckende Schenkelabschnitte 34, 36 vorgesehen, die am anderen Ende mit Trägerabschnitten 38, 40 verbunden sind, die ihrerseits fest mit dem Horn 24 verbunden sind. Die Trägerabschnitte sind in Draufsicht annähernd trapezförmig und verbreitern sich zum Horn 24 hin. Horn 24, Griffe 26, 28, Schenkelabschnitte 34, 36 und Trägerabschnitte 38, 40 bilden jeweils Grifföffnungen 42 bzw. 44.

Wie sich aus der zusammenschauenden Betrachtung der Figuren 2 und 3 ergibt, sind die Griffe 26, 28 auf einer bogenförmigen Kurve 46, 48 verlaufend. Die Krümmungsmittelpunkte 50, 52 bzw. die Radiuslinien 54, 56 befinden sich unterhalb des Deichselkopfes 22. Die Radiuslinien 54, 56 zwischen den Kurven 46, 48 und Krümmungsmittelpunkten 50, 52 bilden einen stumpfen Winkel 58 zum Oberarm 60 des Bedieners (siehe Figuren 1 und 2).

Insbesondere aus Fig. 3 ist zu erkennen, dass die Schenkelabschnitte 34, 36 schräg nach oben und innen angeordnete Auflageflächen 64, 66 aufweisen. Die den Grifföffnungen 42, 44 zugekehrte Kante der Trägerabschnitte 38, 40 ist ebenfalls bogenförmig gekrümmt. Entlang der gekrümmten Kante ist eine Reihe von jeweils drei Schalttasten 68, 70 für verschiedene Funktionen des Flurförderzeugs angeordnet. Sie sind auf einem Kreis 72 bzw. 74 liegend so angeordnet, dass sie bequem vom Zeigefinger oder dem Mittelfinger der Hand erfasst werden können, welche gleichzeitig den Griff 46 bzw. 48 erfasst. Die Schalttasten 68, 70 werden durch Tippen mit den Fingerspitzen von oben betätigt. Daher weist die die Schalttasten 68, 70 tragende Fläche der Trägerabschnitte 38, 40 im Wesentlichen nach oben mit einer minimalen Neigung nach unten in Richtung der Griffe 26, 28. Die Endabschnitte der Griffe 26, 28 sind in ihrer Achse annähernd zur Drehachse des Schaltergriffs 30 bzw. 32 ausgerichtet.

Wie erkennbar, sind die Grifföffnungen 42, 44 nach außen breit und verjüngen sich zum Horn 24 hin. In jedem Fall soll das Greifen und Betätigen der Deichsel mit einer Hand auch von der Seite möglich sein, was insbesondere beim 90°-Lenkwinkeleinschlag beim Rangieren und auch im Mitgängerbetrieb von Vorteil ist.

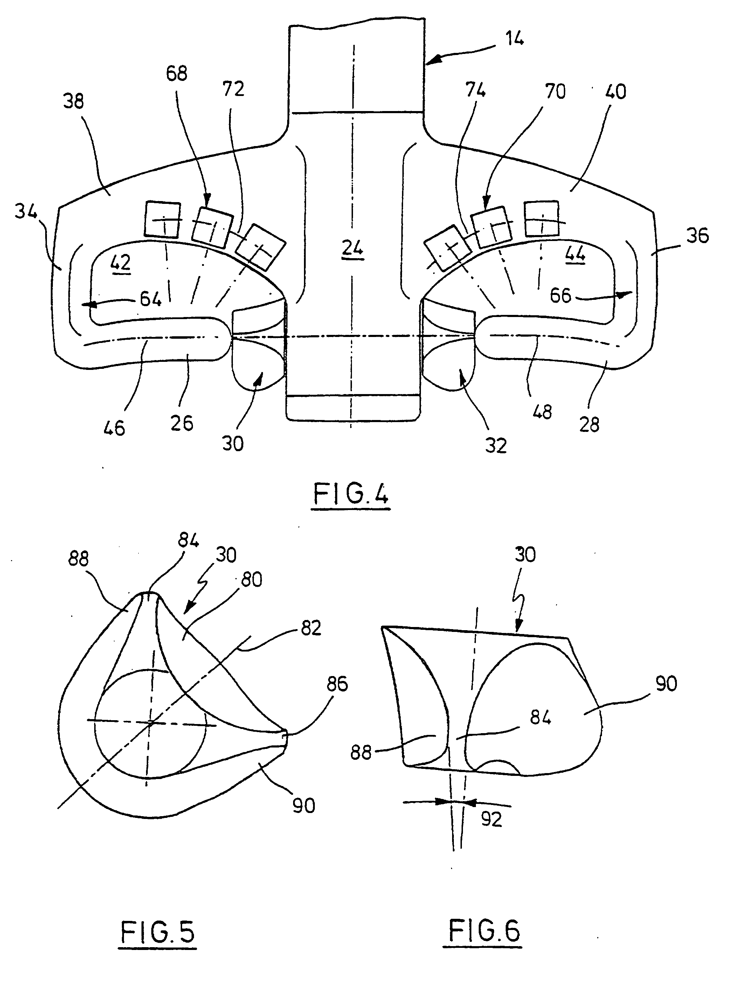

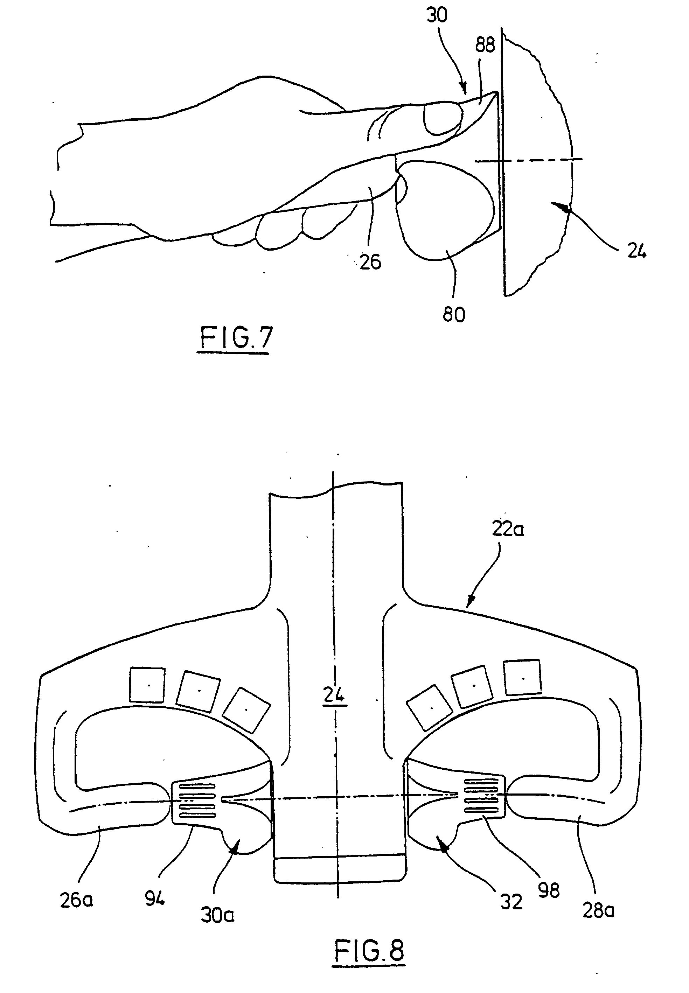

In den Figuren 5 bis 7 ist der Fahrschaltergriff 30 näher dargestellt. Man erkennt die Griffmulde 80, die vom Daumen erfasst wird. Wie erkennbar, ist der Fahrschaltergriff 30 zu einer Ebene 82, die sich durch die Mitte der Mulde 80 erstreckt sowie durch die Drehachse des Fahrschaltergriffs 30 symmetrisch ausgebildet. Mithin sind zu beiden Enden der Mulde 80 Stege 84, 86 geformt, die auf der anderen Stegseitenfläche Griffflächen 88 bzw. 90 bilden für die Betätigung ebenfalls mit dem Daumen, wie sich aus Fig. 7 ergibt. Die Stegfläche 88 ist leicht angeschrägt, wie bei 92 angedeutet. Sie ermöglicht in jedem Fall eine Betätigung des Schaltergriffes 30 beim 90°-Lenkwinkeleinschlag beim Rangieren und auch im Mitgängerbetrieb. Die symmetrische Ausbildung des Griffes 30 dient dazu, für einen Deichselkopf jeweils nur eine Form für den Fahrschaltergriff 30 bzw. 32 zu benötigen.

Wie aus den Figuren 5 und 6 deutlich wird, ist der Fahrschaltergriff auf der Seite des Horns 24 flach ausgebildet und in seiner Breite annähernd konstant.

In Fig. 8 ist ein Deichselkopf 22a dargestellt, der bis auf den Fahrschaltergriff 30a bzw. 32a gleich ausgebildet ist wie der Deichselkopf nach den voranstehend beschriebenen Figuren. Es wird daher darauf verzichtet, den Deichselkopf erneut zu erläutern.

Wie aus Fig. 8 erkennbar, sind die Griffe 26a, 28a etwas verkürzt. Dafür weisen die Fahrschaltergriffe 30a, 32a konische Verlängerungsabschnitte 94, 98 auf, die mit einer Riffelung versehen sind. Sie können mit Daumen und Zeigefinger erfasst werden, um ebenfalls gedreht zu werden. Die motorradgasgriffähnlichen Abschnitte 94, 98 verhindern eine Übermüdung der Handmuskular bei längeren Strecken.

## Patentansprüche

1. Deichsel für kraftgetriebene Flurförderzeuge, mit einem Deichselstiel (14), einem am freien Ende des Deichselstiels (14) angeordneten Deichselkopf (22), bestehend aus einem in Verlängerung des Deichselstiels (14) angeordneten Horn (24), beidseits des Horns (24) sich annähernd quer zum Horn (24) erstreckenden Griffen (26, 28), einem am Horn schwenkbar gelagerten Fahrschaltergriff (30, 32), der einem vom Griff fortweisende Mulde (80) zur Betätigung mit dem Daumen aufweist, wobei die Griffe (26, 28) über an den äußeren Enden der Griffe angebundene und sich annähernd parallel zum Horn (24) erstreckende Schenkelabschnitte (34, 36) und über mit den Schenkelabschnitten (34, 36) verbundene Trägerabschnitte (38, 40) mit dem Horn (24) bzw. dem Stiel (14) verbunden sind und die Schenkel- und Trägerabschnitte einen Schutzbügel mit Grifföffnungen (42, 44) bilden, mindestens zwei Schalttasten (68, 70) auf jeder Seite des Horns (24), die in die Trägerabschnitte (38, 40) eingefügt sind, **dadurch gekennzeichnet, dass** die Griffe (26, 28) auf einer bogenförmigen Kurve (46, 48) verlaufen, deren Krümmungsmittelpunkte (50, 52) sich in der normalen Bedienposition, in der die Deichsel im Mitfahrerbetrieb annähernd auf den Bauch des Bedieners zeigt, unterhalb des Deichselkopfes (22) befinden und die zugehörigen Radiuslinien (54, 56) zwischen den Kurven (46, 48) und Krümmungsmittelpunkten (50, 52) einen stumpfen Winkel (58) zum Unterarm (60) des Bedieners bilden.

2. Deichsel nach Anspruch 1, **dadurch gekennzeichnet, dass** die Achse des Endabschnitts der Griffe (26, 28) nahe dem Fahrschalter (30, 32) annähernd zur Achse des Fahrschalters (30, 32) ausgerichtet ist.

3. Deichsel nach Anspruch 1 oder 2, **dadurch gekennzeichnet, dass** die Schenkelabschnitte (34, 36) auf der Innenseite eine nach oben und zur Seite gerichtete Anlagefläche (64, 66) für den äußeren Finger des Bedieners aufweisen.

4. Deichsel nach einem der Ansprüche 1 bis 3, **dadurch gekennzeichnet, dass** die Griffe (26, 28), Schenkelabschnitte (34, 36) und Trägerabschnitte (38, 40) eine Öffnung (42, 44) bilden, die außen breit und zum Horn (24) hin kleiner wird derart, dass auch das Greifen und Betätigen der Deichsel mit einer Hand von der Seite möglich ist.

5. Deichsel nach einem der Ansprüche 1 bis 4, **dadurch gekennzeichnet, dass** sich auf den nach oben weisenden Flächen der Trägerabschnitte (38, 40) mindestens drei Schalttasten (68, 70) im Arbeitsbereich von Zeige- und Mittelfinger des Bedieners befinden, die auf einer bogenförmigen Kurve (72, 74) angeordnet sind, deren Krümmungsmittelpunkte und Krümmungsradien den Griffen (26, 28) zugewandt sind.

6. Deichsel nach einem der Ansprüche 1 bis 5, **dadurch gekennzeichnet, dass** die Mulde (80) im Fahrschaltergriff (30, 32) nach oben durch einen schmalen Steg (84) begrenzt wird, dessen rückseitige Fläche (88) angeschrägt und so ausgebildet ist, dass der Fahrschaltergriff (30, 32) mit dem Daumen auch bei einem 90°-Lenkwinkeleinschlag beim Rangieren und im Mitgängerbetrieb betätigbar ist.

7. Deichsel nach Anspruch 6, **dadurch gekennzeichnet, dass** der Fahrschaltergriff (30, 32) zu einer Ebene, die durch die Drehachse des Fahrschaltergriffs (30, 32) mittig durch die Mulde (80) verläuft, symmetrisch geformt ist.

8. Deichsel nach einem der Ansprüche 1 bis 7, **dadurch gekennzeichnet, dass** die Fahrschaltergriffe (30a, 32a) zu den Griffen (26a, 28a) hin durch zylindrische oder konische Abschnitte (94, 98) verlängert sind, die mit Zeigefinger und Daumen umfasst werden können.

## Claims

1. A drawbar for power driven fork-lift trucks, comprising a drawbar stem (14), a drawbar head (22) disposed at the free end of said drawbar stem (14), composed of a horn (24) disposed as an extension of said drawbar stem (14), handles (26, 28) extending approximately transversely to said horn (24) on either side of said horn (24), a travel controller handle (30, 32) pivotally supported by said horn that has a trough (80) facing away from said handle for an actuation by the thumb wherein said handles (26, 28) are connected to said horn (24) and said stem (14) via leg portions (34, 36) tied to the outer ends of said handles and extending approximately parallel to said horn (24) and via carrier portions (38, 40) connected to said leg portions (34, 36) and said leg and carrier portions form a protective bracket with gripping apertures (42, 44), at least two switch keys (68, 70) on either side of said horn (24) which are embedded in said carrier portions (38, 40), **characterized in that** said handles (26, 28) extend on an arcuate curve (46, 48) the centres of curvature (50, 52) of which, when in the normal operating position in which the drawbar, when in a passenger-operated mode, points approximately to the belly of the operator, are below said drawbar head (22) and the respective radius lines (54, 56) form an obtuse angle (58) to the lower arm (60) of the operator between said curves (46, 48) and said centres of curvature (50, 52).

2. The drawbar according to claim 1, **characterized in that** the axis of the end portion of said handles (26, 28) is oriented close to said travel switch (30, 32) approximately to the axis of said travel switch (30, 32).

3. The drawbar according to claim 1 or 2, **characterized in that** said leg portions (34, 36), at the inside, have an upwardly and laterally directed abutting surface (64, 66) for the outer finger of the operator.

4. The drawbar according to any one of claims 1 to 3, **characterized in that** said handles (26, 28), leg portions (34, 36), and carrier portions (38, 40) form an aperture (42, 44) which widens outwardly and decreases in size towards the horn (24) such that this also allows to grip and actuate the drawbar by hand from the side.

5. The drawbar according to any one of claims 1 to 4, **characterized in that** at least three switch keys (68, 70), on the upwardly facing surfaces of said carrier portions (38, 40), are within the working range of the index and middle fingers of the operator that are arranged on an arcuate curve (72, 74) the centres of curvature and radii of curvature are directed to the handles (26, 28).

6. The drawbar according to any one of claims 1 to 5, **characterized in that** said trough (80) in said travel controller handle (30, 32) is upwardly limited by a narrow web (84) the rear-sided surface (88) of which is chamfered and configured such as to make operable said travel controller handle (30, 32) by the thumb during maneuvering and in the pedestrian-operated mode also if the lock of the steering angle is 90°.

7. The drawbar according to claim 6, **characterized in that** the travel controller handle (30, 32) is shaped to be symmetric to a plane which centrally extends through said trough (80) and through the axis of rotation of the travel controller handle (30, 32).

8. The drawbar according to any one of claims 1 to 7, **characterized in that** said travel controller handles (30, 32) are extended towards the handles (26a, 28a) by cylindrical or conical portions (94, 98) which can be grasped around by the index and thumb.

## Revendications

1. Timon pour un chariot motorisé de manutention au sol, comportant une barre de timon (14), une tête de timon (22) disposée à l'extrémité libre de la barre de timon (14), constituée d'une corne (24) disposée dans le prolongement de la barre de timon (14), de poignées (26, 28) s'étendant, de part et d'autre de la corne (24), sensiblement perpendiculairement à la come (24), une poignée de commande de déplacement (30, 32), montée pivotante sur la corne (24), et présentant une cuvette (80) dans le prolongement de la poignée, pour actionnement avec le pouce, les poignées (26, 28) étant reliées respectivement à la come (24) et à la barre (14) par des parties de bras (34, 36), raccordées aux extrémités extérieures des poignées et s'étendant sensiblement parallèlement à la corne (24), et par des parties de support (38, 40) reliées aux parties de bras (34, 36), et les parties de bras et les parties de support formant un étrier de protection comportant des ouvertures de poignées (42, 44), au moins deux boutons de commutation (68, 70) de chaque côté de la corne (24), qui sont encastrés dans les parties de support (38, 40),
**caractérisé en ce que** les poignées (26, 28) s'étendent selon une courbe en forme d'arc (46, 48), dont les centres de courbure (50, 52), dans la position normale de service dans laquelle le timon, dans le fonctionnement avec conducteur, pointe sensiblement vers le ventre de l'opérateur, se trouvent en dessous de la tête de timon (22) et les lignes radiales associées (54, 56), entre les courbes (46, 48) et les centres de courbure (50, 52), forment un angle obtus (58) avec l'avant-bras (60) de l'opérateur.

2. Timon suivant la revendication 1, **caractérisé en ce que** l'axe de la partie terminale de poignée (26, 28) proche de la commande de déplacement (30, 32) est sensiblement dirigé vers l'axe de la commande de déplacement (30, 32).

3. Timon suivant la revendication 1 ou 2, **caractérisé en ce que** les parties de bras (34, 36) présentent, sur leur face intérieure, une surface d'appui (64, 66), orientée vers le haut et vers le côté, pour les doigts extérieurs de l'opérateur.

4. Timon suivant l'une des revendications 1 à 3, **caractérisé en ce que** les poignées (26, 28), les parties de bras (34, 36) et les parties de support (38, 40) forment une ouverture (42, 44), qui devient large vers l'extérieur et plus petite en direction de la corne (24), de telle façon que la prise et l'actionnement du timon sont également possibles avec la main depuis l'extérieur.

5. Timon suivant l'une des revendications 1 à 4, **caractérisé en ce qu'**il se trouve, sur les surfaces des parties de support (38, 40) tournées vers le haut, au moins trois boutons de commutation (68, 70) dans la zone de travail de l'index et du majeur de l'opérateur, qui sont disposés sur une courbe en arc (72, 74) dont les points centraux de courbure et les rayons de courbure sont tournés vers les poignées (26, 28).

6. Timon suivant l'une des revendications 1 à 5, **caractérisé en ce que** la cuvette (80) dans la poignée de commande de déplacement (30, 32) est limitée vers le haut par une étroite barrette (84), dont la surface arrière (88) est raccordée par une inclinaison et est réalisée de telle façon que la poignée de commande de déplacement (30, 32) est actionnable avec le pouce même dans le cas d'une application d'un angle de braquage de 90° lors du rangement et du fonctionnement avec conducteur.

7. Timon suivant l'une des revendications 1 à 6, **caractérisé en ce que** la poignée de commande de déplacement (30, 32) a une forme symétrique par rapport à un plan, qui passe par l'axe de rotation de la poignée de commande de déplacement (30, 32), au milieu de la cuvette (80).

8. Timon suivant l'une des revendications 1 à 7, **caractérisé en ce que** les poignées de commande de déplacement (30a, 32a) sont prolongées vers les poignées (26a, 28a) par des parties cylindriques ou coniques (94, 98), qui peuvent être entourées par les index et les pouces.
